# EUROPEAN PATENT SPECIFICATION

(11) **EP 1 570 311 B1**
(45) Date of publication and mention of the grant of the patent: **18.04.2007**
(21) Application number: 03812221.4
(22) Date of filing: 19.11.2003
(51) Int. Cl.: G02F 1/1345, G02F 1/13

(54) **ACTIVE MATRIX DISPLAY DEVICES**
AKTIVMATRIX-ANZEIGEVORRICHTUNGEN
DISPOSITIFS D'AFFICHAGE A MATRICE ACTIVE

(30) Priority: 04.12.2002 GB 0228269
(43) Date of publication of application: 07.09.2005
(73) Proprietor: Koninklijke Philips Electronics N.V., 5621 BA Eindhoven (NL)
(72) Inventor: HECTOR, Jason R. Philips Int. Property & Standards, Redhill, Surrey RH1 5HA (GB); DEANE, S.C. Philips Intel. Propert & Standards, Redhill, Surrey RH1 5HA (GB)
(74) Representative: Damen, Daniel Martijn
(86) International application number: PCT/IB2003/005270
(87) International publication number: WO 2004/051355

(56) References cited:
- JP-A- 9 015 646
- US-A- 5 625 476
- US-A- 5 721 599
- PATENT ABSTRACTS OF JAPAN vol. 1996, no. 10, 31 October 1996 (1996-10-31) -& JP 08 146448 A (SONY CORP), 7 June 1996 (1996-06-07)

## Description

This invention relates to an active matrix display device comprising first and second substrates, electro-optical material disposed between the first and second substrates, an array of display pixels comprising picture element electrodes and associated switches carried together with sets of address conductors on the first substrate, and a common electrode carried on the second substrate, each picture element electrode together with an overlying portion of the common electrode and the electro-optical material therebetween defining a pixel, and drive means connected to the sets of address conductors for applying drive signals to the array of pixels.

A common display device of this form is an AMLCD (active matrix liquid crystal display). A typical example of such is described in US-A-5130829. In this device an array of display pixels is provided, arranged in rows and columns, with each pixel comprising an electro-optic cell, constituting a picture element, formed by LC material sandwiched between a picture element electrode and part of a counter electrode common to all pixels, and an associated thin film transistor (TFT).

Display devices of this type are commonly used in monitors, TVs, laptop computers, PDAs, and mobile phones for example.

The TFTs of the pixels typically comprise amorphous silicon (a-Si) type TFTs, or polycrystalline or microcrystalline silicon type TFTs formed on one substrate of the device, usually of glass, together with a picture element electrodes and sets of address conductors using well-known thin film processing technology, typically involving the deposition and patterning of various conducting, insulating, and semi-conducting layers using for example CVD and photolithographic techniques. In the case of devices employing a-Si TFTs, the driving circuitry, for example the row driver circuitry providing selection (scanning) signals to a set of row address conductors, is usually provided in the form of one or more silicon ICs. These can be provided on a PCB separate to the display device substrates with, for example, a foil connector being used to connect the outputs of the ICs to respective address conductors. It is known also to mount the driver ICs on flexible foils connected to the address conductors. This can lead to cost reductions but a PCB is usually still employed to provide low resistance power lines and interconnections between the ICs. The driver ICs can instead be mounted directly on one substrate of the device, for example using COG (Chip On Glass) techniques, alongside one or more edges of the pixel array. When using polycrystalline or microcrystalline silicon TFTs for the pixels the driver circuitry may conveniently be integrated on the device's substrate carrying the active matrix circuit at one or more edges by forming the circuitry from thin film circuit elements and fabricating these elements simultaneously with the TFTs and other components of the pixel array from common deposited layers. In these two latter approaches, however, where the driver circuits are provided on a substrate of the device, problems can arise because of the higher resistances of connections on a glass substrate compared with those formed on a PCB. These problems can be particularly noticeable in comparatively large area AMLCDs, for example with a 20 inch diagonal or greater. Voltages supplied to certain components in the pixel array need to be well defined and stable other wise the quality of the images produced can be degraded. Connection resistances can affect such voltages, particularly in lines carrying larger currents, and may lead to visible artefacts in the display image. For example, vertical cross-talk effects, or longer range non-uniformity problems such as gate voltages changes to the address TFTs of the pixels causing flicker in the display image may result. Also, variation in reference voltage levels over the array can produce dark and light banding effects from the top to the bottom of the display image.

In JP 09015646 a liquid crystal display device is described in which a voltage for a common electrode on one substrate is provided by a connection to a voltage supply line on the other substrate, and in which said voltage supply line is also connected to a storage capacitor connection line also on the other substrate.

One particular feature which may be affected seriously in this way leading to unwanted display artefacts is the connection to pixel storage capacitor lines. Storage capacitors are commonly used in the pixels of an AMLCD to assist in maintaining a desired voltage across the picture element, and hence its display output, in the period following its addressing until it is next addressed, generally corresponding to a frame period. The storage capacitor of a pixel is connected at its one side to the node between the TFT drain and the picture element electrode and at its other side to a reference potential which may be a row address conductor (gate line) associated with an adjacent (preceding or succeeding) row of pixels, or alternatively to an auxiliary conductor extending in the row direction and shared by all pixels in the same row. These auxiliary conductors are interconnected with one another and constitute a capacitor line. The introduction of resistances as low as, for example 5 to 10 ohms in the connection of this capacitor line can produce visible artefacts in the display image. An electrical connection formed on a glass substrate can typically result in a resistance of up to 100 ohms, and may thus be unacceptable.

According to the present invention there is provided an active matrix display device comprising first and second substrates, electro-optical material disposed between the first and second substrates, an array of display pixels comprising picture element electrodes and associated switches carried together with sets of address lines on the first substrate and a common electrode carried on the second substrate, and drive means connected to the sets of address conductors for applying drive signals to the array of pixels, the drive means comprising a drive circuit which is carried on the first substrate and which includes conductor lines, the common electrode on the second substrate being connected electrically to at least one of the conductor lines on the first substrate that provides a drive voltage for the common electrode, characterised in that the common electrode on the second substrate is utilised to provide electrical connection between the one conductor line and at least one other circuit element of the drive means or the pixel array carried on the first substrate.

The drive circuit may be in the form of one or more ICs which are mounted on the first substrate, at a peripheral edge region outside the pixel array area or may comprise thin film circuitry integrated on the first substrate, again at a peripheral edge region, fabricated in known manner simultaneously with the active matrix circuit associated with the pixels and from common deposited thin film layers. As a further alternative, the drive circuit may comprise one or more ICs mounted on a foil connector that is attached to, and supported by, the first substrate with its conductive tracks or lines being connected to the circuitry carried directly on the substrate. This may be advantageous in enabling defective ICs to be replaced.

The use of the common electrode for electrical connection purposes in this manner is beneficial to avoiding the aforementioned connection resistance problems. The common electrode, normally comprising a transparent electrically conductive material such as ITO, has a relatively low sheet resistance. Typically, the sheet resistance may be as low as a few ohms in the case where the ITO layer is backed by, and electrically contacts, a metallic black mask grid. Such a grid is present in most AMLCDs on the common electrode substrate, its primary function being to provide a light opaque border around the individual picture elements to prevent optical cross-talk, and in some cases also to shield the pixel TFTs from light.

In an AMLCD the common electrode on one substrate is normally connected to a voltage bias source on the other substrate by means of one or more connections, so-called transfer contacts, formed for example by a silver paste, and bridging the gap between the two substrates outside the display area, for example at the edge of one substrate. In a preferred embodiment of the invention, electrical connections between the common electrode on the second substrate and the conductor line on the first substrate and between the common electrode and an electrical contact area on the first substrate associated with the other circuit element on the first substrate are provided in similar fashion, i.e using an electrically conductive material such as silver paste bridging the gap between the two substrates. Preferably, a plurality of spaced bridging connections between the two substrates are provided, for example arranged along opposing edges of the second substrate.

In a particular embodiment, the other circuit element comprises the storage capacitor line, and in this case a capacitor connection line connecting together the individual storage capacitor row line portions of the pixel rows provided on the first substrate at one side of the array, for example adjacent an edge of the second substrate, or at each of two opposing sides of the array, and this connection line provides contact areas for the bridging connections. The facility for interconnection through the common electrode may also be used to advantage in supplying other circuit elements on the active plate needing a corresponding voltage level.

Although AMLCDs are of particular interest, the device may use electro-optical materials other than liquid crystal crystal materials, such as electrophoretic or electrochromic materials for example.

An embodiment of active matrix display device, in particular an AMLCD, in accordance with the invention will now be described, by way of example, with reference to the accompanying schematic drawings, in which:-
Figure 1 shows a highly simplified cross-sectional view through part of an embodiment of AMLCD according to the invention;
Figure 2 illustrates the equivalent electrical circuit of the AMLCD of Figure 1;
Figure 3 is a plan view of an example AMLCD illustrating a known arrangement of certain components; and
Figure 4 is a plan view of the embodiment of AMLCD of Figure 1 illustrating certain features and components of the device.

It will be appreciated that the Figures are all merely schematic and are not drawn to scale. The same reference numbers are used throughout the figures to denote the same or similar parts.

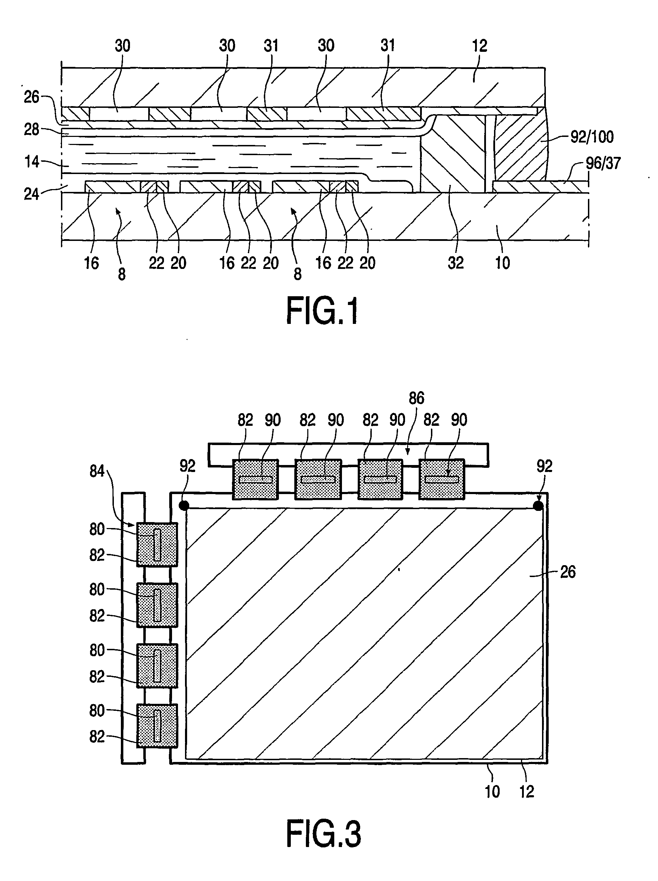

Referring to Figure 1, the AMLCD is of generally conventional structure having a matrix array of display pixels 8 and comprises first and second spaced substrates 10 and 12, typically of glass, between which a layer of liquid crystal material 14 is disposed. Only a relatively small part of the structure is shown in the Figure. The substrate 10, commonly referred to as the active plate, carries a row and column array of individual picture element electrodes 16 located adjacent respective intersections of crossing sets of row and column address conductors 18 and 20, only the column address conductors 20 being visible in the Figure. Each picture element electrode 16 is connected to a respective switching device in the form of a TFT (thin film transistor) 22 (not shown in Figure 1) comprising an amorphous silicon or polycrystalline silicon type FET. The active matrix circuitry comprising the electrodes 16, address conductors 18, 20, and the TFTs 22 on the substrate 10 is covered by a LC (liquid crystal) orientation layer 24.

The other substrate 12, commonly referred to as the passive plate, carries a continuous common, or counter, electrode 26 of transparent electrically conductive material, such as ITO, which is co-extensive with the array of picture element electrodes 16 and separated from the liquid crystal layer 14 by an LC orientation layer 28. The common electrode 26 overlies a structure comprising an array of red, green and blue colour filter elements 30 aligned with respective electrodes 16 of the array of electrodes 16, and a light opaque black mask layer 31, in the form of a grid, portions of which extend between, and separate, individual colour filter elements 30 in known manner.

Each picture element electrode 16 together with a respective overlying portion of the common electrode 26, a respective colour filter element 30 and LC material therebetween defines a picture element which together with its associated TFT 22 constitutes a display pixel 8.

The two substrates 10 and 12 are maintained at a desired separation by spacer elements (not shown) and sealed together around the periphery of the pixel array to contain the LC material by a seal 32 which also defines the boundary of the pixel array.

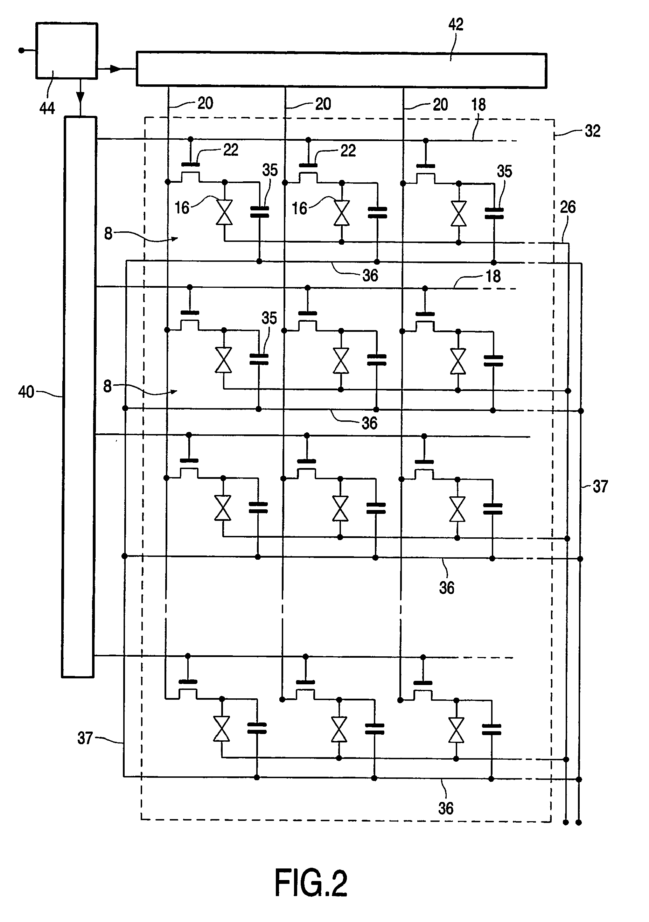

Referring now to Figure 2, which shows the equivalent circuit of the display device, each picture element electrode 16 is connected to the drain of its associated TFT 22. The gates of the TFTs 22 of all the pixels 8 in the same row are connected to a respective row address conductor 18. The sources of the TFTs 22 of all the pixels 8 in the same column are connected to a respective column address conductor 20. Each display pixel 8 further includes, in known manner, a storage capacitor 35 connected at one side to the node between its picture element electrode 16 and the TFT 22 and at its other side to a capacitor line 36 shared by all the pixels in the same row and provided in the form of an auxiliary row conductor extending in the row direction. The capacitor row lines 36 associated with all pixel rows are connected together at both ends outside the area of the pixel array by capacitor connection lines 37 extending along opposing sides of the array. A suitable reference potential source is connected to these lines in operation of the device to provide a desired operating voltage bias to the storage capacitors.

The device is operated in generally conventional manner. Briefly, the sets of row and column address conductors 18 and 20 are respectively connected at their ends to row and column driver circuits 40 and 42. The pixel array is driven on a row at a time basis by means of the row driver circuit 40, comprising for example a digital shift register circuit, scanning the row address conductors 18 sequentially with a selection (gating) pulse signal so as to turn on the TFTs 22 of the pixels 8 of each row in turn in a respective row address period. The column driver circuit 42 supplies data (video) signals to the column address conductors 20 for each row of pixels in turn as appropriate and in synchronism with the row selection signals whereby the picture elements in each row are driven according the level of the applied data signal. Using one row at a time addressing, all TFTs 22 of the addressed row are switched on by the selection signal on the associated row conductor 18 for a period corresponding to the duration of that signal during which time the data signals are transferred from the column conductors 20 to charge up the picture element electrodes 16 and their associated storage capacitors 35. Upon termination of the selection signal, the TFTs of the row of pixels are turned off to isolate the picture elements from the column conductors 20 and ensuring the applied charge is stored in the picture elements and storage capacitors until the pixels are next addressed. All rows of pixels are addressed in turn in this manner in a frame period to produce a complete display image and repeatedly addressed in similar fashion in successive frame periods. Each picture element serves to modulate light passing through the picture element according to the applied data signal which determines its transmission characteristics. The device may be operable in a transmissive mode, in which the picture element electrodes 16 and the common electrode 26 are all formed of transparent conductive material or in a reflective mode in which either the common electrode or the picture element electrodes are formed of light reflective material.

Timed operation of row driver circuit 40 is controlled by a timing and control circuit 44 which is also responsible for controlling the timing of the operation of the column driver circuit 42. The column driver circuit 42 is of any conventional kind and may be of analogue or digital type. In the former case it may, for example, comprise one or more shift register/sample and hold circuits with the timing and control circuit 44 supplying thereto video signal and timing pulses, in synchronism with row scanning, to provide appropriate serial to parallel conversion.

During operation of the device, the common electrode 26 and the capacitor connection line 37 are held at a constant reference potential, for example, ground. Alternatively, and in accordance with known drive schemes, the voltage on the electrode 26 may be modulated, in order to reduce the data signal voltage range necessary from the column driver circuit 42, with the voltage of the capacitor connection line 37 changing in corresponding fashion. In this case, the waveform applied to the row address conductors 18 is modified such that the non-selection, gate off, level is similarly modulated by a corresponding amount to ensure that the address TFTs 22 of the pixels are held fully off in the intervals between selection and to avoid unwanted capacitive coupling effects.

From the foregoing, It will be appreciated that the general constructional and operational aspects of the device follow known practice and consequently have not been described in great detail. Further details in these respects may be obtained from US-A-5130829 for example.

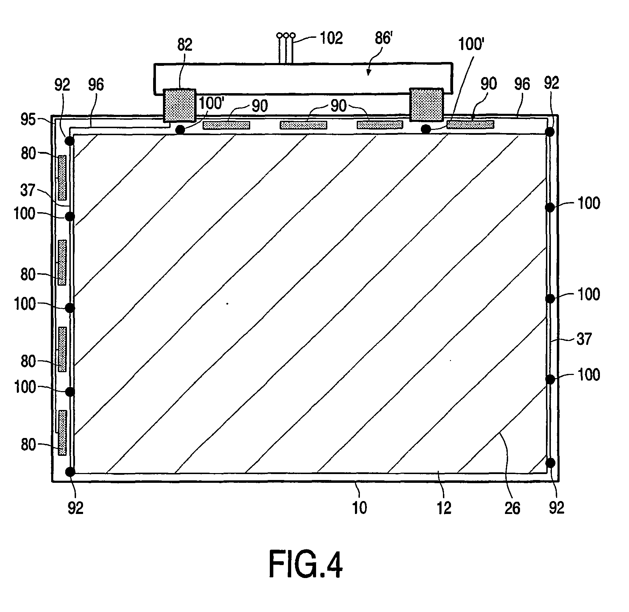

Figure 3 illustrates a known manner in which the row and column driver circuits 40 and 42 may be provided. In this, the circuits each comprise a set of individual silicon ICs, or chips, 80, 90, mounted on respective foil connectors 82 comprising a flexible film carrying conductive tracks which contact respective ones of the chip outputs. The substrate 12 is physically smaller than the substrate 10 and mounted to the substrate 10 so as to leave peripheral edge regions of the substrate 10 exposed. The foil connectors 82 are bonded at their one side to these edge regions of the substrate 10, where the tracks electrically connect with respective extensions of the address conductors 18, 20, and at their other side to a PCB (printed circuit board), 84, 86 respectively for the set of row driver chips 80 and the set of column driver chips 90. The PCBs 84 and 86 each carry low resistance conductor lines associated with the set of chips such as power rails for voltage distribution which need to be low resistance to avoid voltage drops when currents flow in them, and timing signal lines. An electrical connection from the substrate 10 to the common electrode 26 carried on the second substrate 12 is achieved by one or more transfer contacts extending between the two substrates outside the seal line, and adjacent the edge of the substrate 12, as shown at 92 in Figure 1. In the Figure 3 arrangement two transfer contacts, 92, are provided at adjacent corners of the substrate 12. The transfer contacts typically comprise silver paste material contacting on the substrate 12 an extension of the common electrode and on the substrate 10 a conductive track, carrying the reference potential for the common electrode. A disadvantage of this kind of arrangement is that it can be expensive to implement. Moreover, it is not especially suited to producing a compact display device in view of the use of peripheral foil connectors and PCBs.

In an alternative known arrangement, the chips 80 constituting the row driver circuit are instead mounted directly on an edge region of the substrate 10 employing, for example, COG technology and using conductor tracks formed on the substrate 10 to provide the interconnection function of the PCB 84, thereby eliminating the need for that PCB. The chips 90 constituting the column driver circuit may be mounted on an edge of the substrate 10 in similar manner.

Figure 4 shows a plan schematic view of the embodiment of AMLCD according to the invention. In this particular example amorphous silicon type TFTs are used in the display pixels and the row and column driver circuits 40 and 42 each comprise a plurality of chips (ICs) 80, 90 arranged mutually spaced in a line. The chips 80 and 90 are mounted on respective edge regions of the substrate 10 outside the pixel array area and the seal line and along respective adjacent sides of the pixel array. The chips are mounted on the substrate using any suitable known technique, for example COG, with individual output terminals of the chips electrically contacting respective extensions (not shown) of the sets of row and column address conductors 18 and 20 is known fashion. Electrically conductive lines interconnecting the chips are formed on the surface of the substrate 10 extending along the edge regions which perform the same general function as the tracks of the PCBs in the above - described known arrangement in supplying power and timing signals, and, for the column driver chips 90 video data signals. Only one such track, indicated at 95, is shown in Figure 4 for simplicity, the track 95 extending alongside the line of row driver chips 80. A transfer contact 92 is provided adjacent each corner of the substrate 12 connecting the common electrode 26 at each of its four corners to driving voltage supply tracks 96 also carried on the substrate 10, each transfer contact 92 overlying and electrically contacting a respective contact region of such a supply track.

Also arranged at spaced intervals alongside two opposing edges of the substrate 12 are additional bridging connections 100 extending between the two substrates 10 and 12 and at the edge of the substrate 12 in similar manner to the transfer contacts 92, there being a series of three additional contacts 100 provided on each side at opposing edges of the substrate 12 in the example illustrated although the number of such contacts can be varied. These bridging connections 100, formed similarly to the transfer contacts 92, for example of silver paste, define connection points between the substrates 10 and 12. At the substrate 12 they contact the common electrode 26, or an outwardly projecting extension thereof, and at the substrate 10 are arranged so as to overlie, and electrically contact, portions of the capacitor connection line 37 which for this purpose are arranged extending along the respective edge regions of the substrate 10 parallel to, and approximately beneath, the opposing edges of the substrate 12. In the illustrated embodiment, the same conductive track is used to constitute the capacitor connection line 37 and the track 96 supplying the drive voltage to the transfer contacts 92 on each side of the array. The tracks 96/37 are connected, via a foil connector 82, to a column driver PCB 86' which carries the common electrode drive voltage generating circuit. Connections to external circuitry, providing for example power supply, video signals, etc, is made from the PCB 86', as shown at 102.

In this way, the common electrode 26 is utilised to provide, in addition to its usual function of serving as the second electrodes of the picture elements of the array, a supply function for elements of the active matrix circuit on the substrate 10, in this case in providing a required potential to the capacitor lines 36 and supplementing the connection lines 37 provided on the substrate 10. This avoids problems which may be encountered in use due to nature of the lines 37 and their inherent resistance. Being formed from thin film conductive material on glass these lines inevitably possess low conductivity compared with, for example, the relatively much thicker conductive tracks of a PCB. As previously explained, it is especially important for producing a high quality display image that the reference potential of the storage capacitors 35 be well defined and stable. The introduction of resistances as low as, for example, 5 ohms in the capacitor lines can result in highly visible unwanted display artefacts and connections on the glass substrate 10 can easily lead up to 100 ohms of connection resistance. The common electrode 26 typically has an effective low sheet resistance, for example around just a few ohms in the case where the metallic black mask layer 31 is used which is in direct electrical contact with the ITO material of the common electrode 26. By virtue of the fact that the common electrode 26 is connected to a voltage bias source via the transfer contacts 92 the presence of the plurality of additional bridging connections 100 enables a low resistance path to providing the required voltage bias to the storage capacitor lines 36 on the substrate 10.

To assist in minimising the sheet resistance of the common electrode 26 and the connection resistance to the storage capacitor lines 26, the black mask layer 31 is preferably made of a low resistance alloy, such as aluminium, copper or silver alloys.

The same principle as described above to provide low resistance interconnect for the capacitor lines may be used for other components of the circuitry on the substrate 10 where a bias potential equivalent to that of the common electrode is required. For example, such additional interconnects may be used for column driver circuit voltage level referencing purposes or in providing the appropriate, corresponding levels of the waveforms applied to the row address conductors 18' by the row driver circuit 40.

The use of the common electrode 26 in this way can eliminate the need to provide a separate PCB in association with the row driver circuitry, shown at 84 in Figure 3. The technique can also lead to a simplified, and physically smaller, PCB associated with the column driver circuitry, as shown at 86' in Figure 4 where the common electrode 26 is utilised as well to perform certain connection functions previously accomplished using PCB conductor tracks. This is achieved by a set of further additional bridging connections 100', similar to contacts 100, being used between the substrates 10 and 12 along the upper side edge of the substrate 12 to this end.

The additional bridging connections 100 and 100' are conveniently formed in the same manner and at the same time as the transfer contacts 92 using any suitable known techniques for forming such transfer contacts, for example as described in US-A-5625476.

It is envisaged that the driver circuit ICs need not be mounted directly on the surface of the substrate 10. As an alternative, the driver ICs, for example the chips 80, may each be mounted on a foil that is carried on, and supported by, the substrate 10 at a peripheral region with the conductive tracks of the foil connecting to the circuitry on the substrate. This allows for easy replacement of the ICs should defects occur.

Although in the above described embodiment silicon ICs are used for the driver circuits, these circuits may instead be fully integrated on the substrate 10 using thin film component circuitry comprising TFTs, capacitors and interconnections, when using polycrystalline or microcrystalline silicon TFTs for the pixels 8. As is well known, row and/or column driver circuits can be readily fabricated using thin film technology similar to that used to produce the active matrix circuitry. Fabrication of the driver circuits simultaneously with the active matrix circuitry, from common deposited thin film layers, leads to considerable cost savings.

From reading the present disclosure, other modifications will be apparent to persons skilled in the art. Such modifications may involve other features which are already known in the field of active matrix display devices and component parts therefor and which may be used instead of or in addition to features already described herein.

## Claims

1. An active matrix display device comprising a first and a second substrate (10, 12), an electro-optical material (14) disposed between the first and the second substrate (10, 12), an array of display pixels (8) comprising picture element electrodes (16) and associated switches (22) carried together with sets of address lines (18, 20) on the first substrate (10), a common electrode (26) carried on the second substrate (12), and drive means (40, 42, 44, 80, 90) connected to the sets of address lines (18, 20) for applying drive signals to the array of pixels (8), the drive means (40, 42, 44, 80, 90) comprising a drive circuit (40, 42) which is carried on the first substrate (10) and which includes conductor lines (95, 96), the common electrode (26) on the second substrate (12) being electrically connected (92) to at least one of the conductor lines (96) on the first substrate (10) that provides a drive voltage for the common electrode (26), **characterised in that** the common electrode (26) on the second substrate (12) is utilised to provide electrical connection (100) between the one conductor line (96) and at least one other circuit element (37) of the drive means (40, 42, 44, 80, 90) or of the pixel array carried on the first substrate.

2. A device according to Claim 1, wherein the drive circuit (40,42) comprises at least one integrated circuit (80, 90) mounted on the first substrate (10).

3. A device according to Claim 1, wherein the drive circuit (40, 42) comprises thin film circuit elements integrated on the first substrate (10).

4. A device according to any one of Claims 1 to 3, wherein the common electrode (26) is connected to the at least one other circuit element (37) via at least one connection element (100) extending between the first (10) and the second substrate (12) adjacent an edge of the second substrate (12).

5. A device according to any one of Claims 1 to 4, wherein the display pixels (8) include storage capacitors (35) which are connected at their one side to a capacitor connection line (37) carried on the first substrate (10) and wherein the common electrode (26) is utilised to provide electrical connection between the one conductor line (96) and the capacitor connection line (37).

6. A device according to Claim 5, wherein the capacitor connection line (37) extends on the first substrate (10) adjacent one edge of the second substrate (12) and connects together at one side of the array a plurality of capacitor row lines (36), each capacitor row line (36) being connected to the storage capacitors (35) of a respective row of pixels (8), and wherein the common electrode (26) is connected electrically with the capacitor connection line (37) at spaced locations (92, 100) along that edge of the second substrate (12).

7. A device according to Claim 6, wherein the capacitor connection line (37) also extends on the first substrate (10) adjacent an opposing edge of the second substrate (12) and connects together the plurality of capacitor row lines (36) at the opposing side of the array, and wherein the common electrode (26) is connected with the capacitor connection line (37) at spaced locations along the opposing edge of the second substrate (12).

8. A device according to Claim 6 or 7, wherein the common electrode (26) is connected to the capacitor connection line (37) via bridging connections (100) extending between the first (10) and the second substrate (12) and arranged along a substantial part of the length of the edge of the second substrate (12).

9. A device according to Claim 8, wherein the bridging connections (100) comprise conductive material disposed between the two substrates (10, 12) adjacent the edge of the second substrate (12).

10. A device according to any one of the preceding claims, wherein the common electrode (26) is connected to the at least one conductive line (96) on the first substrate (10) via at least one bridging connection (92) comprising conductive material disposed between the two substrates (10, 12) adjacent an edge of the second substrate (12).

11. A device according to Claim 10, wherein the common electrode (26) is connected to the at least one conductive line (96) via a plurality of bridging connections (92) arranged adjacent to the corners of the second substrate (12).

12. A device according to any one of the preceding claims, wherein in the second substrate (12) carries a metallic black mask layer (31) adjacent to, and in electrical contact with, the common electrode (26).

13. A device according to any one of the preceding claims, wherein the electro-optical material (14) comprises liquid crystal material.

## Patentansprüche

1. Aktivmatrix-Anzeigevorrichtung, welche umfasst: ein erstes und ein zweites Substrat (10, 12), ein elektrooptisches Material (14), das zwischen dem ersten und dem zweiten Substrat (10, 12) angeordnet ist, ein Array von Displaypixeln (8), die Bildelementelektroden (16) und zugehörige Schalter (22) umfassen, die zusammen mit Sätzen von Adressleitern (18, 20) auf dem ersten Substrat getragen (10) werden, eine gemeinsame Elektrode (26), die auf dem zweiten Substrat (12) getragen wird, und Ansteuerungsmittel (40, 42, 44, 80, 90), die mit den Sätzen von Adressleitern (18, 20) verbunden sind, zum Anlegen von Ansteuersignalen an das Array von Pixeln (8), wobei die Ansteuerungsmittel (40, 42, 44, 80, 90) eine Ansteuerschaltung (40, 42) umfassen, welche auf dem ersten Substrat (10) getragen wird und welche Leiterwege (95, 96) aufweist, wobei die gemeinsame Elektrode (26) auf dem zweiten Substrat (12) mit wenigstens einem der Leiterwege (96) auf dem ersten Substrat (10), welcher eine Ansteuerspannung für die gemeinsame Elektrode (26) zuführt, elektrisch verbunden (92) ist, **dadurch gekennzeichnet, dass** die gemeinsame Elektrode (26) auf dem zweiten Substrat (12) benutzt wird, um eine elektrische Verbindung (100) zwischen dem einen Leiterweg (96) und wenigstens einem anderen Schaltungselement (37) der Ansteuerungsmittel (40, 42, 44, 80, 90) oder des Pixelarrays, das auf dem ersten Substrat getragen wird, zu schaffen.

2. Vorrichtung nach Anspruch 1, wobei die Ansteuerschaltung (40, 42) wenigstens eine integrierte Schaltung (80, 90) umfasst, die auf dem ersten Substrat (10) angebracht ist.

3. Vorrichtung nach Anspruch 1, wobei die Ansteuerschaltung (40, 42) Dünnschicht-Bauelemente umfasst, die auf dem ersten Substrat (10) integriert sind.

4. Vorrichtung nach einem der Ansprüche 1 bis 3, wobei die gemeinsame Elektrode (26) mit dem wenigstens einen anderen Schaltungselement (37) über wenigstens ein Verbindungselement (100) verbunden ist, das sich zwischen dem ersten (10) und dem zweiten Substrat (12) erstreckt und einem Rand des zweiten Substrates (12) benachbart ist.

5. Vorrichtung nach einem der Ansprüche 1 bis 4, wobei die Displaypixel (8) Speicherkondensatoren (35) aufweisen, welche auf ihrer einen Seite mit einer Kondensator-Verbindungsleitung (37) verbunden sind, die auf dem ersten Substrat (10) getragen wird, und wobei die gemeinsame Elektrode (26) verwendet wird, um eine elektrische Verbindung zwischen dem einen Leiterweg (96) und der Kondensator-Verbindungsleitung (37) herzustellen.

6. Vorrichtung nach Anspruch 5, wobei sich die Kondensator-Verbindungsleitung (37) auf dem ersten Substrat (10) nahe bei einem Rand des zweiten Substrates (12) erstreckt und auf einer Seite des Arrays mehrere Kondensatorzeilenleitungen (36) miteinander verbindet, wobei jede Kondensatorzeilenleitung (36) mit den Speicherkondensatoren (35) einer jeweiligen Zeile von Pixeln (8) verbunden ist, und wobei die gemeinsame Elektrode (26) an Abstände voneinander aufweisenden Stellen (92, 100) entlang jenes Randes des zweiten Substrates (12) elektrisch mit der Kondensator-Verbindungsleitung (37) verbunden ist.

7. Vorrichtung nach Anspruch 6, wobei sich die Kondensator-Verbindungsleitung (37) außerdem auf dem ersten Substrat (10) nahe bei einem gegenüberliegenden Rand des zweiten Substrates (12) erstreckt und die mehreren Kondensatorzeilenleitungen (36) auf der gegenüberliegenden Seite des Arrays miteinander verbindet, und wobei die gemeinsame Elektrode (26) an Abstände voneinander aufweisenden Stellen entlang des gegenüberliegenden Randes des zweiten Substrates (12) mit der Kondensator-Verbindungsleitung (37) verbunden ist.

8. Vorrichtung nach Anspruch 6 oder 7, wobei die gemeinsame Elektrode (26) mit der Kondensator-Verbindungsleitung (37) über Überbrückungsverbindungen (100) verbunden ist, die sich zwischen dem ersten (10) und dem zweiten Substrat (12) erstrecken und entlang eines wesentlichen Teils der Länge des Randes des zweiten Substrats (12) angeordnet sind.

9. Vorrichtung nach Anspruch 8, wobei die Überbrückungsverbindungen (100) elektrisch leitendes Material umfassen, das zwischen den zwei Substraten (10, 12) in der Nähe des Randes des zweiten Substrates (12) angeordnet ist.

10. Vorrichtung nach einem der vorhergehenden Ansprüche, wobei die gemeinsame Elektrode (26) mit dem wenigstens einen Leiterweg (96) auf dem ersten Substrat (10) über wenigstens eine Überbrückungsverbindung (92) verbunden ist, die elektrisch leitendes Material umfasst, das zwischen den zwei Substraten (10, 12) in der Nähe eines Randes des zweiten Substrates (12) angeordnet ist.

11. Vorrichtung nach Anspruch 10, wobei die gemeinsame Elektrode (26) mit dem wenigstens einen Leiterweg (96) über mehrere Überbrückungsverbindungen (92) verbunden ist, die in der Nähe der Ecken des zweiten Substrates (12) angeordnet sind.

12. Vorrichtung nach einem der vorhergehenden Ansprüche, wobei das zweite Substrat (12) eine metallische schwarze Maskenschicht (31) trägt, die der gemeinsamen Elektrode (26) benachbart ist und mit ihr in elektrischem Kontakt steht.

13. Vorrichtung nach einem der vorhergehenden Ansprüche, wobei das elektrooptische Material (14) Flüssigkristallmaterial umfasst.

## Revendications

1. Dispositif d'affichage à matrice active comprenant un premier et un deuxième substrat (10, 12), un matériau électro-optique (14) disposé entre le premier et le deuxième substrat (10, 12), un tableau de pixels d'affichage (8) comprenant des électrodes d'élément d'image (16) et des commutateurs associés (22) placés avec des ensembles de lignes d'adresse (18, 20) sur le premier substrat (10), une électrode commune (26) placée sur le deuxième substrat (12), et des moyens de commande (40, 42, 44, 80, 90) connectés aux ensembles de lignes d'adresse (18, 20) pour appliquer des signaux de commande au tableau de pixels (8), les moyens de commandes (40, 42, 44, 80, 90) comprenant un circuit de commande (40, 42) qui est placé sur le premier substrat (10) et qui inclut des lignes conductrices (95, 96), l'électrode commune (26) sur le deuxième substrat (12) étant électriquement connectée (92) à au moins une des lignes conductrices (96) sur le premier substrat (10) qui fournit une tension de commande pour l'électrode commune (26), **caractérisé en ce que** l'électrode commune (26) sur le deuxième substrat (12) est utilisée pour fournir une connexion électrique (100) entre ladite une ligne conductrice (96) et au moins un autre élément de circuit (37) des moyens de commande (40, 42, 44, 80, 90) ou du tableau de pixels placé sur le premier substrat.

2. Dispositif selon la revendication 1, dans lequel le circuit de commande (40, 42) comprend au moins un circuit intégré (80, 90) monté sur le premier substrat (10).

3. Dispositif selon la revendication 1, dans lequel le circuit de commande (40, 42) comprend des éléments de circuit à couches minces intégrés sur le premier substrat (10).

4. Dispositif selon l'une quelconque des revendications 1 à 3, dans lequel l'électrode commune (26) est connectée audit au moins un autre élément de circuit (37) via au moins un élément de connexion (100) s'étendant entre le premier (10) et le deuxième substrat (12), adjacent à un bord du deuxième substrat (12).

5. Dispositif selon l'une quelconque des revendications 1 à 4, dans lequel les pixels d'affichage (8) incluent des condensateurs de stockage (35) qui sont connectés d'un côté à une ligne de connexion de condensateurs (37) placée sur le premier substrat (10) et dans lequel l'électrode commune (26) est utilisée pour fournir une connexion électrique entre ladite une ligne conductrice (96) et la ligne de connexion de condensateurs (37).

6. Dispositif selon la revendication 5, dans lequel la ligne de connexion de condensateurs (37) s'étend sur le premier substrat (10) adjacente à un bord du deuxième substrat (12), et connecte ensemble d'un côté du tableau une pluralité de lignes de rangée de condensateurs (36), chaque ligne de rangée de condensateurs (36) étant connectée aux condensateurs de stockage (35) d'une rangée respective de pixels (8), et dans lequel l'électrode commune (26) est électriquement connectée à la ligne de connexion de condensateurs (37) à des emplacements espacés (92, 100) le long de ce bord du deuxième substrat (12).

7. Dispositif selon la revendication 6, dans lequel la ligne de connexion de condensateurs (37) s'étend également sur le premier substrat (10), adjacente à un bord opposé du deuxième substrat (12), et connecte ensemble la pluralité de lignes de rangée de condensateurs (36) au côté opposé du tableau, et dans lequel l'électrode commune (26) est connectée à la ligne de connexion de condensateurs (37) à des emplacements espacés le long du bord opposé du deuxième substrat (12).

8. Dispositif selon la revendication 6 ou 7, dans lequel l'électrode commune (26) est connectée à la ligne de connexion de condensateurs (37) via des connexions de pont (100) s'étendant entre le premier (10) et le deuxième substrat (12) et aménagées le long d'une partie substantielle de la longueur du bord du deuxième substrat (12).

9. Dispositif selon la revendication 8, dans lequel les connexions de pont (100) comprennent un matériau conducteur disposé entre les deux substrats (10, 12), adjacent au bord du deuxième substrat (12).

10. Dispositif selon l'une quelconque des revendications précédentes, dans lequel l'électrode commune (26) est connectée à ladite au moins une ligne conductrice (96) sur le premier substrat (10) via au moins une connexion de pont (92) comprenant un matériau conducteur disposé entre les deux substrats (10, 12), adjacent à un bord du deuxième substrat (12).

11. Dispositif selon la revendication 10, dans lequel l'électrode commune (26) est connectée à ladite au moins une ligne conductrice (96) via une pluralité de connexions de pont (98) aménagées adjacentes aux coins du deuxième substrat (12).

12. Dispositif selon l'une quelconque des revendications précédentes, dans lequel le deuxième substrat (12) porte une couche de masque noire métallique (31) adjacente à l'électrode commune (26) et en contact électrique avec celle-ci.

13. Dispositif selon l'une quelconque des revendications précédentes, dans lequel le matériau électro-optique (14) comprend un matériau à cristaux liquides.
